# EUROPEAN PATENT APPLICATION

(11) **EP 1 903 823 A2**
(43) Date of publication of application: **26.03.2008**
(21) Application number: 07018640.8
(22) Date of filing: 21.09.2007
(51) Int. Cl.: H04Q 7/38

(54) **Method of handling radio link failure in wireless communications system and related device**

(30) Priority: 21.09.2006 US 846102 P
(71) Applicant: Innovative Sonic Limited, Tortola (VG)
(72) Inventor: Jen, Yu-Chih, Peitou, Taipei City Taiwan (TW)
(74) Representative: Hager, Thomas Johannes

(57) **Abstract**

Handling radio link failure efficiently in a packet switching domain of a wireless communications system includes a user equipment performing an action when an indication is received from a network entity for an action rule or action rules and a trigger or triggers to enter a radio state (302), and the user equipment entering the radio state (304).

## Description

This application claims the benefit of U.S. Provisional Application No. 60/846,102, filed on September 21, 2006 and entitled "Method and Apparatus for Handling Radio Link Failure in Wireless Communications System," the contents of which are incorporated herein by reference.

The present invention relates to a method of handling radio link failure in wireless communications systems and related devices according to the pre-characterizing clauses of claims 1 and 18.

In a wireless communications system, radio link failure (RLF) between user equipment (UE) and UTRAN can occur due to all kinds of impairments in a wireless environment, unfavorable signal propagation conditions, or even system malfunctions. For some applications, upon RLF, a user may notice immediately if there is unexpected delay or discontinuity in the radio bearer over which the service is provided. Mechanisms, including a cell update procedure, used to detect and/or handle the failures require parameters and timers to trigger each step of a normal procedure, or to make decisions for linking to other procedures. With the mechanism, re-establishments of lost radio connections will be managed, so that the incident is likely to be unnoticed by the user, or at least can be recovered from as soon as possible.

The timers and parameters in the UE, e.g. T31 3, T314/T31 5, N302, N31 5, N31 3, T302, or T307, are obtained from a system information block, and some are used with counters, e.g. V302, for handling related circumstances, respectively. For example, T314 and T31 5, acting as re-establishment timers when re-establishments of lost connections are still allowed, are simply used to determine when to go to IDLE mode after reconnection attempts from the decisions of cell update and reselection, where T314 and T315 are typically used in circuit switching and packet switching domain, respectively. T314 and T315 values used in NBs are configured by RNC and are usually larger than those used in UEs. In contrast, in the case of 3GPP LTE, it is assumed that only the packet switching domain will be utilized, and it is expected that there will be more applications for mobile devices. The provision of similar mechanisms for RLF in LTE remains to be well defined.

Forward handover is used in UMTS to recover the loss of a radio link, or a failed reconfiguration procedure. A UE can initiate a cell update procedure with the target Node B when a regular handover fails and when the UE is not able to go back to the source Node B. In LTE, efficient performance of forward handover is expected and a related forwarding feature can be further exploited to enhance the radio link connection and service continuity.

In UMTS, there is a timer in a domain used to decide when to enter the IDLE mode upon the detection of RLF. Based on the assumption that an RLF in LTE_ACTIVE (RRC_CONNECTED) state is most comparable with an RLF in CELL_DCH in UMTS, it is suggested that only one timer (T315 for PS domain) will be needed to decide when to enter LTE_IDLE (RRC_IDLE), since there will be only one domain in LTE.

In the prior art, it remains unclear how many timers are used to determine when to go to IDLE and how each timer value is configured in LTE. It is understood that there will be only one domain (PS) in LTE. However, one domain does not mean that just one timer is needed. For, when two timers, working independently, were introduced in UMTS for two domains, the characteristics of provided application services, e.g. real time or non-real time, were also considered to set the configuration values. In LTE, employed services and new applications will have various QoS requirements and different sensitivities to the endurable duration of radio link failure, e.g. out of synchronization.

In addition, based on the consideration of potential UE capability, e.g. dual receiver or multiple receiver, it is possible that the UE will maintain more than one radio link in different frequency layers or monitor different frequency bands, where different services and applications may applied, Therefore, it is possible that radio link failure will happen in one frequency layer, and the other frequency layer (or other frequency layers in case of multiple receiver) will maintain good radio link condition. Similarly, it is also possible that one service-providing entity will encounter a malfunction, but the other will provide stable services. Even with one receiver, different services may require different timers. Therefore, there is no reason to maintain only one timer that may limit the efficiency of UE capability and be unfair to different service requirements.

On the other hand, the values of timers are configured in the RNC in UMTS. However, LTE removes the RNC, so that it is unclear which entity should decide the configuration values of the timers. It is known that characteristics of SAE bearer services will be decided at the gateway level (aGW). In addition, a functional entity at the gateway level also knows about network configuration and signaling and user plan load. Yet, the functional entity at the NodeB level (eNB) might respond and reflect the transmission status more quickly.

Further, in UMTS, T31 3 (based on N313) and N31 3 (maximum number of successive out of sync indications received from L1) are used to detect the radio link failure. In addition, T302, N302 and V302 are used for a cell update/URA update procedure, where V302 is a counter/variable instead of a timer/parameter. It is set by UE instead of being received from SIB.

Similar to the problem of the prior art mentioned above, it remains unclear how many timers and parameters are used to detect or handle the radio link failure, and how those values are configured in LTE. In addition, there might be several mobility and QoS levels for one single application. For example, from the same gaming/MBMS service provider (server), a provided gaming application running on a UE could be real time or non-real time with mobility levels of none, low, medium or high. Consequently, an application might require a cell update procedure (or a random access procedure in LTE performs the similar functions) more frequent sometimes, but not require the cell update procedure (or same-functional procedure) as frequently at other times. On the other hand, for some applications, the time of detection of radio link failure might be more critical than others.

Thus, it seems desirable that the timers and parameters in UE and eNB in LTE be updateable or reconfigurable, without the need for bearer re-establishment. This is based on the assumption that values of timer(s) and parameter(s) for RLF recovery by initiating the cell update procedure or same-functional procedure (e.g. random access procedure) are received during SAE bearer establishment.

For all of the above discussion, mapping from LTE_IDLE to RRC_IDLE and from LTE_ACTIVE to RRC_CONNECTED are assumed. Cell update procedure in LTE in the context only represents a procedure performing re-establishment or location update in functional and conceptual point of view.

This in mind, the present invention aims at providing a method and apparatus for handling radio link failure in a packet switching domain of a wireless communications system, so as to ente a radio state after radio link failure is detected.

This is achieved by a method and apparatus for handling radio link failure in a packet switching domain of a wireless communications system according to the pre-characterizing clauses of claims 1 and 18. The dependent claims pertain to corresponding further developments and improvements.

As will be seen more clearly from the detailed description following below, a method of handling radio link failure in a packet switching domain of a wireless communications system comprises a user equipment (UE) performing action(s) if an indication is received from a network entity for action rule(s) and/or trigger(s) to enter a radio state, and the user equipment entering the radio state or remaining in the state.

In the following, the invention is further illustrated by way of example, taking reference to the accompanying drawings. Thereof
Fig. 1 is a functional block diagram of a communications device.
Fig. 2 is a diagram of the program code shown in Fig. 1.
Fig. 3 is a flowchart of handling radio link failure according to a preferred embodiment of the present invention.

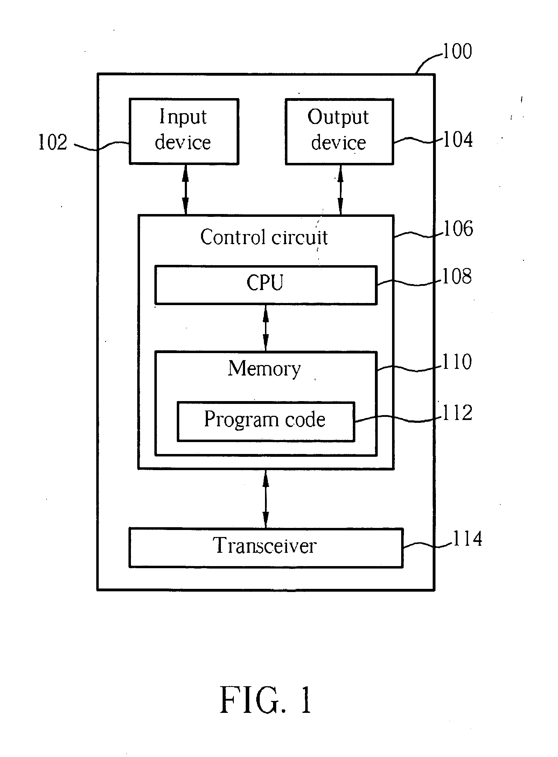

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100.

In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3 or even higher layers. Preferably, the communications device 100 is utilized in an LTE/SAE mobile communications system.

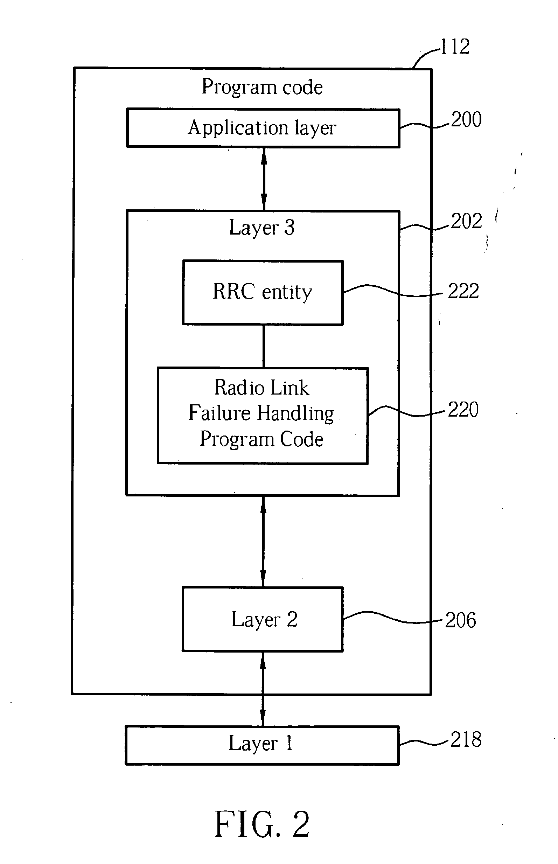

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 3 202 includes a radio resource control (RRC) entity 222, which is used for controlling the Layer 1 218 and the Layer 2 206 and performing peer-to-peer RRC communication with other communications devices, such as a base station or a Node-B-like entity. In addition, the RRC entity 222 can change an RRC state of the communications device 100, switching between an idle mode, a detached state, and an active state. The program code 112 further comprises a radio link failure handling program code 220, which is used for handling radio link failure.

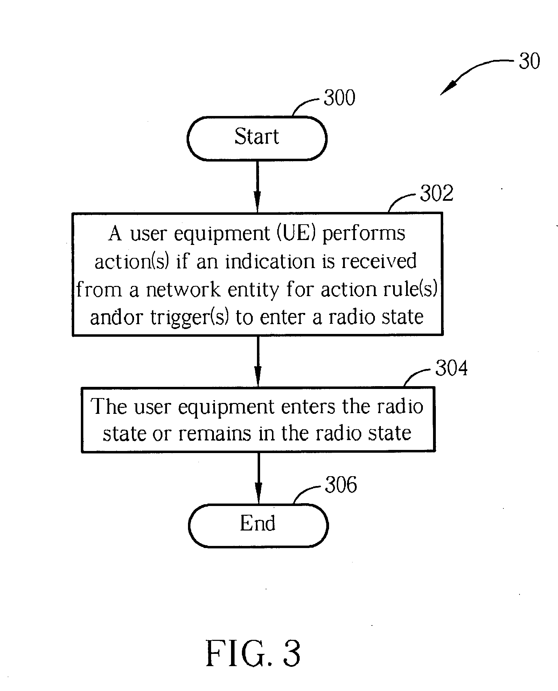

Please refer to Fig. 3, which is a flowchart of a process 30 for detecting radio link failure according to a preferred embodiment and a second embodiment of the present invention. The process 30 is used to handle radio link failure in a communications device, such as the radio link failure handling program code 220 in the communications device 100 described above, in a wireless communications system, such as an LTE/SAE wireless communications system, and comprises the following steps:
Step 300: Start.
Step 302: A user equipment (UE) performs action(s) if an indication is received from a network entity for action rule(s) and/or trigger(s) to enter a radio state.
Step 304: The user equipment enters the radio state or remains in the radio state.
Step 306: End.

In LTE, if there is an indication from an eNB, an aGW, a core network, or service provider informing the UE to perform action(s) or enter an idle mode, such as LTE_IDLE (RRC_IDLE) or LTE_DETACHED, or to remain or re-enter an active mode, such as LTE_ACTIVE (due to RLF, system malfunction, or other issue) based on action rules, procedures (if any) in the UE for performing radio link detection and/or radio link re-establishment and/or location update procedures can be stopped or postponed, and/or the UE follows the received indication. When to perform the action or station transition is based on the trigger event, action rules, or indication message type or content, e.g. the time to perform can be immediately or after a certain time. The UE recognizes the indication and decides what to do to reduce signaling and delay as long as it receives the indication earlier than, or no later than, the termination of the above procedure. The indication can be acquired by the UE through a forward indication procedure or method, where the indication is transmitted by other eNB(s). The indication acquiring procedure can work in parallel with the aforementioned radio link recovery procedure (triggered by radio link failure detection) if it is not restricted. In addition, the indication acquiring procedure can be configured to replace the radio link recovery procedure that is needed. The UE follows the indication if any, which is acquired through connection with a source eNB, if the radio link with the source eNB is sustained. The forward indication method or procedure can be initiated by the UE or a network-level entity (eNB, aGW, core network, or service provider) when the radio link with the source eNB is detected failed. While the UE is waiting for the confirmation message of the re-establishment or the location update or response of cell recovery from the source eNB, the UE can perform measurement and cell reselection. If the indication is initiated by the UE through the re-establishment or the location update to another eNB to remain in or re-enter LTE_ACTIVE (RRC_CONNECTED), the method or procedure can be the forward handover. If the indication is initiated by the network-level entity, the method or procedure can be a network (service) control action or network assisted radio link handling procedure. The UE can then perform the re-establishment or the location update to both the source eNB and the target eNB, and the UE will ultimately maintain a relationship with either the source eNB or the target eNB based on timing of the reception of the confirmation of the re-establishment or the location update. If the confirmation of the re-establishment or the location update is received from the target eNB first, then the UE follows the indication in the confirmation of the re-establishment or the location update. If the confirmation of the re-establishment or the location update is received from the source eNB first, or received no later than the confirmation of the re-establishment or the location update from the target eNB, then the UE shall maintain relationship with the source eNB only.

The UE may receive indication including action rules and/or a state transition command from the original eNB before RLF. The UE may also receive the indication from another eNB due to RLF. Forwarding means interaction with a target eNB or a non-serving eNB due to losing communication with the original or serving eNB. The indication acquisition procedure and the re-establishment procedure use the same procedure model but for different purposes.

## Claims

1. A method of handling radio link failure in a packet switching domain of a wireless communications system comprising:
a user equipment performing action or actions if an indication is received from a network entity for action rule or rules and/or trigger or triggers to enter a radio state (302); and
the user equipment entering the radio state or remaining in the radio state (304).

2. The method of claim 1, wherein the network entity is a NodeB entity, a gateway entity, a core network entity, or a service provider.

3. The method of claim 1, wherein the action is at least one procedure recognizable for the user equipment for the user equipment to follow the indication, or a radio link procedure; wherein the radio link procedure is a radio link detection, radio link re-establishment, or location update procedure.

4. The method of claim 1, wherein the radio state is an idle state, a detached state, or an active state.

5. The method of claim 1, wherein the indication is received before a radio link failure detection phase, or no later than the termination of the radio link failure detection phase or a re-establishment phase, or during an IDLE state.

6. The method of claim 1, wherein the indication is acquired by the user equipment through forward indication or a forwarding procedure, and the indication is transmitted by another network entity.

7. The method of claim 1, wherein acquisition of the indication is performed in parallel with the radio link re-establishment procedure before the termination of radio link re-establishment phase if it is not restricted.

8. The method of claim 1, wherein an indication acquisition procedure is configured to replace the radio link re-establishment procedure before or after station transition.

9. The method of claim 1, wherein the user equipment follows the indication acquired through connection with a source network entity, if a radio link with the source network entity is sustained.

10. The method of claim 6, wherein the forward indication is initiated by the user equipment, an evolved NodeB, an access gateway, a core network, or a service provider when the radio link with the source network entity is detected failed.

11. The method of claim 7, further comprising the user equipment performing measurement and cell reselection while waiting for a re-establishment confirmation message or response from the source network entity.

12. The method of claim 10, wherein the procedure is the forward mobility procedure if the indication is initiated by the user equipment through a re-establishment procedure or a location update procedure to another network entity to remain in or re-enter an active state.

13. The method of claim 10, wherein if the said indication is initiated by the network entity, the procedure is a network control action or network-assisted radio link handling procedure.

14. The method of claim 11, further comprising:
the user equipment performing a re-establishment procedure or a location update procedure to both the source network entity and a target network entity; and
the user equipment maintaining a relationship with the source network entity or the target network entity based on timing of the reception of the procedure confirmation.

15. The method of claim 14, wherein the user equipment follows the indication in the confirmation of the re-establishment or the location update if the confirmation of the re-establishment or the location update is received from the target network entity first.

16. The method of claim 14, wherein the user equipment maintains a relationship with the source network entity if the confirmation of the re-establishment or the location update from the source network entity is received first, or received no later than the confirmation of the re-establishment or the location update from the target network entity.

17. The method of claim 8, wherein the indication acquisition procedure and the re-establishment procedure use the same procedure model but for different purposes.

18. A communications device (100) capable of detecting radio link failure for use in a wireless communications system, the communications device (100) comprising:
a control (106) circuit for realizing functions of the communications device (100);
a processor (108) installed in the control circuit (106), for executing a program code (112) to operate the control circuit (106); and
a memory (110) coupled to the processor (108) for storing the program code (112), the program code (112) comprising:
code for a user equipment performing action(s) if an indication is received from a network entity for action rule or rules and/or trigger or triggers to enter a radio state (302); and
code for the user equipment entering the radio state or remaining in the radio state (304).

19. The communications device of (100) claim 18, wherein the network entity is a NodeB entity, a gateway entity, a core network entity, or a service provider.

20. The communications device (100) of claim 18, wherein the action is at least one procedure recognizable for the user equipment for the user equipment to follow the indication, or a radio link procedure; wherein the radio link procedure is a radio link detection, radio link re-establishment, or location update procedure.

21. The communications device (100) of claim 18, wherein the radio state is an idle state, a detached state, or an active state.

22. The communications device (100) of claim 18, wherein the indication is received before a radio link failure detection phase, or no later than the termination of the radio link failure detection phase or a re-establishment phase, or during an IDLE state.

23. The communications device (100) of claim 18, wherein the indication is acquired by the user equipment through forward indication or a forwarding procedure, and the indication is transmitted by another network entity.

24. The communications device (100) of claim 18, wherein acquisition of the indication is performed in parallel with the radio link re-establishment procedure before the termination of radio link re-establishment phase if it is not restricted.

25. The communications device (100) of claim 18, wherein an indication acquisition procedure is configured to replace the radio link re-establishment procedure before or after station transition.
